**Europäisches Patentamt**

**European Patent Office**

**Office européen des brevets**

(19)

(11) Veröffentlichungsnummer : **0 042 881**
**B1**

(12) # EUROPÄISCHE PATENTSCHRIFT

(45) Veröffentlichungstag der Patentschrift :
**05.10.83**

(21) Anmeldenummer : **80103642.7**

(22) Anmeldetag : **27.06.80**

(51) Int. Cl.³ : **G 01 N 27/90**, G 01 N 33/20

(54) Verfahren und Vorrichtung zur Prüfung eines metallischen Prüfteils.

(43) Veröffentlichungstag der Anmeldung :
**06.01.82 Patentblatt 82/01**

(45) Bekanntmachung des Hinweises auf die Patenterteilung : **05.10.83 Patentblatt 83/40**

(84) Benannte Vertragsstaaten :
**DE FR GB SE**

(56) Entgegenhaltungen :
**DE A 2 850 433**
**DE A 2 913 877**
**GB A 1 030 687**
**US A 3 499 661**

(73) Patentinhaber : **Institut Dr. Friedrich Förster Prüfgerätebau GmbH & Co. KG**
**Postfach 925 In Laisen 70**
**D-7410 Reutlingen 1 (DE)**

(72) Erfinder : **Hecht, Hans**
**Udamstrasse 81**
**D-7000 Stuttgart 80 (DE)**
Erfinder : **Neumaier, Peter**
**Hermann-Ehlers-Strasse 20**
**D-7410 Reutlingen 1 (DE)**

EP 0 042 881 B1

Jouve, 18, rue St-Denis, 75001 Paris, France

## Verfahren und Vorrichtung zur Prüfung eines metallischen Prüfteils

Die Erfindung betrifft ein Verfahren zur Prüfung eines metallischen Prüfteiles aufgrund von mittels einer Prüfspule im Prüfteil erzeugten Wirbelströmen, wobei eine vom Scheinwiderstand der Prüfspule abhängige Meßgröße ermittelt wird, die als Maß für Werkstoffeigenschaften des Prüfteils dient. Ferner betrifft die Erfindung eine Vorrichtung zum Durchführen des Verfahrens, mit einer Prüfspule, die geeignet ist, im Prüfteil Wirbelströme zu erzeugen, mit einer elektrischen Schaltungsanordnung zum Herstellen einer vom Scheinwiderstand der Prüfspule abhängigen Meßgröße, bestehend in einer Oszillatorschaltung, die Verstärkermittel und zwei auf benachbarte Frequenzen $f_1$, $f_2$ abgestimmte Schwingkreise umfaßt, wobei der Scheinwiderstand der Prüfspule die induktive Komponente eines der beiden oder beider Schwingkreise ganz oder teilweise darstellt und wobei ein die Resonanzfrequenz eines der beiden Schwingkreise beeinflussendes Bauteil veränderbar ist.

Das genannte Verfahren wird u. a. benutzt zur Prüfung metallischer Halberzeugnisse und Erzeugnisse auf Fehler in deren Oberfläche, wie Risse und Kerben, auf elektrische Leitfähigkeit und magnetische Permeabilität sowie auf mit den beiden letzteren in Zusammenhang stehende mechanische Größen, wie Härte und dgl. Zum Ermitteln der vom Scheinwiderstand der Prüfspule abhängigen Meßgröße bedient man sich bekannter Meßschaltungen, z. B. elektrischer Brückenschaltungen, aber auch Oszillatorschaltungen, bei denen die Prüfspule einen Bestandteil eines zur Schwingungserzeugung eingesetzten Schwingkreises bildet. Im letzteren Falle kann die Meßgröße in der entstehenden Schwingspannung oder -frequenz des Oszillators bestehen. In US-A-3 449 661 ist beispielsweise eine Oszillatorschaltung beschrieben, in der am Gitter einer Elektronenröhre ein erster Schwingkreis liegt, dessen induktive Komponente in der Induktivität der Prüfspule besteht, während ein zweiter Schwingkreis an der Anode der Röhre liegt. Häufig erwachsen Schwierigkeiten daraus, daß die Meßgröße sich ändert, wenn die Lage der Prüfspule zum Prüfteil variiert wird, etwa wenn im Falle einer Tastprüfspule diese unabsichtlich mehr oder weniger von der Oberfläche des Prüfteiles entfernt wird. Im Falle des genannten US-Patentes wird die Schwierigkeit weitgehend ausgeschaltet, indem man Resonanzfrequenz und Güte des Anodenschwingkreises auf einen Wert bringt, bei dem sich die Oszillatorspannung zwischen abgehobenen und aufgesetzten Zustand der Tastprüfspule nur wenig oder garnicht ändert. Man geht dabei in der Weise vor, daß man solange schrittweise die Induktivität des Schwingkreises und einen parallel zum Schwingkreis liegenden Widerstand ändert, während man gleichzeitig abwechselnd die Tastprüfspule vom Prüfteil abhebt und auf dasselbe aufsetzt, bis sich an einem Anzeigegerät für die Oszillatorspannung keine nennenswerten Schwankungen zwischen aufgesetztem und abgehobenem Zustand der Tastprüfspule mehr zeigen. Das ist jedoch ein umständlicher und außerordentlich zeitraubender Abgleichvorgang, der den Wert der beschriebenen Prüfanordnung stark vermindert. Bei anderen Prüfanordnungen gilt ähnliches.

Die Erfindung macht sich demgegenüber zur Aufgabe, ein Verfahren bzw. eine Vorrichtung gemäß den eingangs definierten Gattungsbegriffen zu finden, bei denen der Abgleich auf möglichst geringe Änderung der Meßgröße bei gegebener Variation der Lage der Prüfspule zum Prüfteil einfach, schnell und mühelos geschieht.

Diese Aufgabe wird gelöst durch ein Verfahren, das gemäß Anspruch 1, und durch eine Vorrichtung, die gemäß Anspruch 2 gekennzeichnet ist. Die bisherige Praxis des Abgleichs auf minimale Änderung der Meßgröße bei gegebener Variation der Lage der Prüfspule zum Prüfteil wird nach der erfindungsgemäßen Lösung ganz wesentlich vereinfacht. Während es nach dem Stand der Technik nötig war, einigemale abwechselnd eine erste bzw. eine zweite Lage der Prüfspule zum Prüfteil herzustellen, also z. B. bei einer Tastprüfspule einigemale zwischen abgehobenem und aufgesetztem Zustand der Prüfspule abzuwechseln, dabei jeweils zwei Stellorgane zu bestätigen und gleichzeitig ein Anzeigeorgan zu beobachten, erfordert die erfindungsgemäße Lösung nur ein einmaliges Herstellen der ersten bzw. zweiten Lage der Prüfspule und die Änderung nur eines Parameters. Nach einer Reihe von vorteilhaften Ausgestaltungen der Erfindung, die in Unteransprüchen festgehalten sind, läßt sich u. a. der Abgleichvorgang noch weiter vereinfachen und weitgehend automatisieren.

Im folgenden soll die Erfindung anhand einiger Figuren und mit Hilfe von Ausführungsbeispielen näher erläutert werden. Es zeigen im einzelnen :

Figur 1 eine Prüfvorrichtung nach dem Stand der Technik ;

Figur 2 ein Teil einer erfindungsgemäßen Prüfvorrichtung ;

Figur 3 Diagramme der Oszillatorspannung $U_M$ ;

Figur 4 ein Prinzip-Blockschaltbild der Erfindung ;

Figuren 5 und 6 Bockschaltbilder von Ausführungsbeispielen.

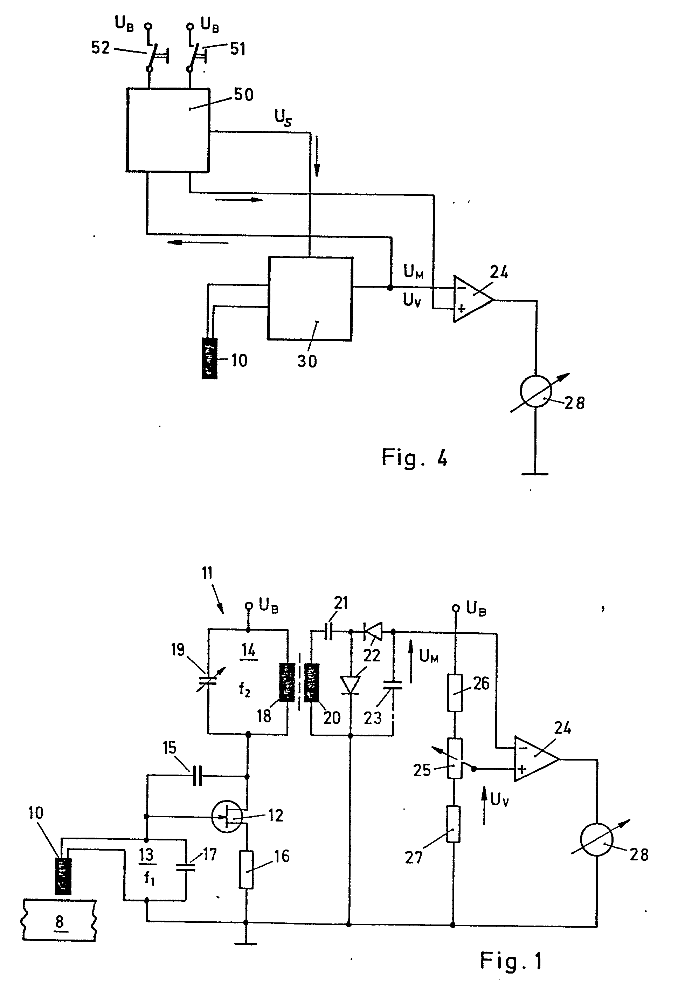

Figur 1 zeigt das vereinfachte Schaltbild einer bekannten Prüfvorrichtung zum Ermitteln von Fehlern in metallischen Prüfteilen, die ähnlich wie in US-A 3 449 661 eine Oszillatorschaltung 11 benutzt, um eine dem Scheinwiderstand einer Tastprüfspule 10 entsprechende Meßgröße, die Oszillatorspannung $U_M$, herzuleiten. Oszillatorschaltung 11 setzt sich zusammen aus einem Feldeffekttransistor 12 als Verstärkerelement und zwei auf die Frequenzen $f_1$ und $f_2$ abgestimmten Schwingkreisen 13 bzw. 14, einem Rückkopplungskondensator 15 und dem Widerstand 16.

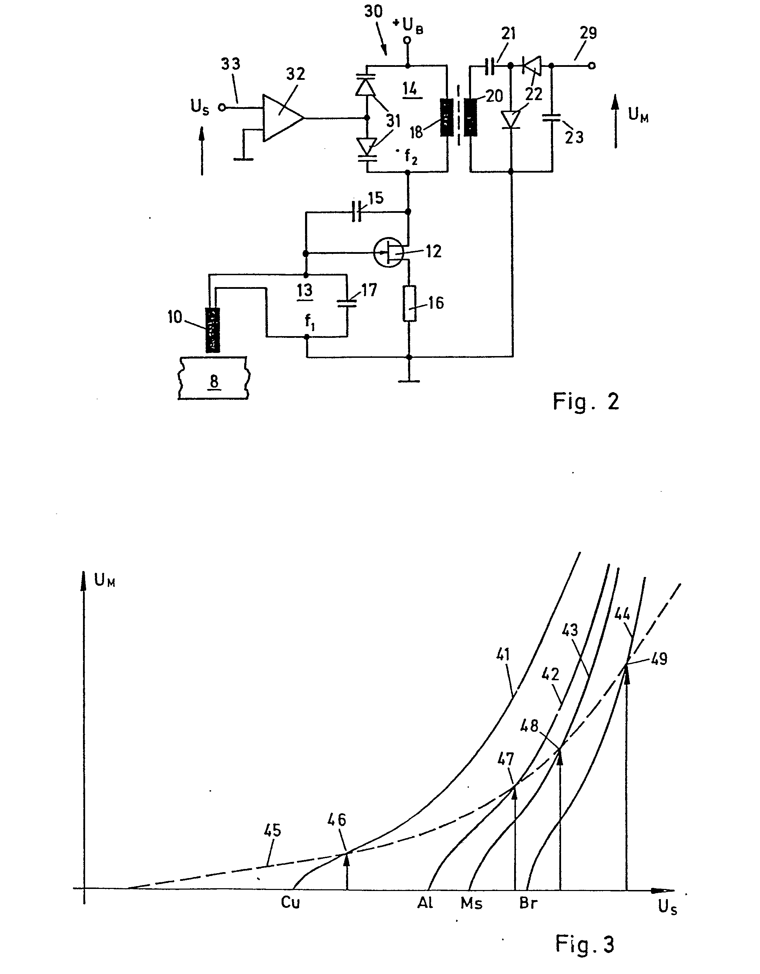

Die beiden Resonanzfrequenzen $f_1$, $f_2$ sind im allgemeinen dicht benachbart. Die sich einstellende Schwingfrequenz der Oszillatorschaltung 11 liegt unterhalb der kleineren der beiden Frequenzen $f_1$, $f_2$. Resonanzkreis 13 besteht in der Parallelschaltung der Prüfspule 10 mit einem Kondensator 17, Resonanzkreis 14 in der Parallelschaltung des Induktors 18 mit einem Drehkondensator 19. Induktor 18 besitzt eine Sekundärwicklung 20, an die über einen Koppelkondensator 21 eine Gleichrichterschaltung angeschlossen ist. Zur letzteren gehören zwei Dioden 22 und ein Ladekondensator 23. Die gleichgerichtete Oszillatorspannung $U_M$ liegt am ersten Eingang eines Differenzverstärkers 24, während dessen zweiter Eingang mit dem Schleifer eines Potentiometers 25 verbunden ist, das mit den Widerständen 26 und 27 einen Spannungsteiler für die Speisespannung $U_B$ bildet. Der Ausgangsstrom des Verstärkers 24 wird von einem Anzeigeinstrument 28 gemessen. Die sich einstellende Oszillatorspannung $U_M$ steht in einem eindeutigen Zusammenhang mit dem Scheinwiderstand der Prüfspule 10. Ist die letztere auf ein metallisches Prüfteil 8 aufgesetzt, so hängt die Oszillatorspannung $U_M$ wegen der Rückwirkung der im Prüfteil erzeugten Wirbelströme auf die Prüfspule 10 von Werkstoffeigenschaften des Prüfteils ab. Da im vorliegenden Fall nur die von Fehlern im Prüfteil hervorgerufenen Änderungen der Wirbelstromrückwirkungen ermittelt werden sollen, wird am Anzeigeinstrument 28 die im Verstärker 24 gebildete Differenz zwischen der Oszillatorspannung $U_M$ und einer einstellbaren Teilerspannung $U_V$ zur Anzeige gebracht. Damit kleine Änderungen des Abstandes zwischen Prüfspule 10 und Prüfteil 8, hervorgerufen etwa durch Verkanten der Prüfspule oder durch Verunreinigungen der Prüfteiloberfläche, ohne Wirkung bleiben, muß eine Abhebekompensation der Oszillatorschaltung 11 durchgeführt werden. Das geschieht, indem man eine Einstellung des Drehkondensators 19 sucht, bei der sich die Oszillatorspannung $U_M$ und damit die Anzeige am Anzeigeinstrument 28 zwischen aufgesetztem und abgehobenem Zustand der Prüfspule 10 vom Prüfteil 8 nicht ändert. Da jede Einstellung des Drehkondensators 19 einen anderen Wert der Oszillatorspannung $U_M$ mitsichbringt, muß für jede neue Einstellung des Drehkondensators durch Verstellen des Potentiometers 25 auch eine neue Teilerspannung $U_V$ hergestellt werden, um den Gleichgewichtszustand am Anzeigeinstrument 28 zu erhalten. Die gewünschte Einstellung der beiden Stellorgane kann daher nur durch schrittweise Annäherung gefunden werden. Im folgenden soll dies durch die Figuren 2 und 3 noch etwas deutlicher gemacht werden.

In Figur 2 ist noch einmal eine Oszillatorschaltung 30 dargestellt, die der Oszillatorschaltung 11 nach Figur 1 in vielen Einzelheiten entspricht, so daß weitgehend die Referenzziffern von Figur 1 übernommen werden konnten. Anstelle des Drehkondensators 19 ist jedoch eine Serienschaltung von zwei Kapazitätsdioden 31 vorgesehen, deren Kapazitätswert durch eine Steuerspannung $U_S$ am Eingang eines Rechenverstärkers 32 gesteuert werden kann. Die Serienschaltung von zwei Kapazitätsdioden verfolgt dabei nur den Zweck, die Aussteuerbarkeit der Dioden durch die anliegende Wechselspannung zu vergrößern. Für eine Reihe unterschiedlicher Leitfähigkeiten des Prüfteils ist in Figur 3 die sich einstellende Oszillatorspannung $U_M$ in Abhängigkeit von der Steuerspannung $U_S$, d. h. in Abhängigkeit von der Resonanzfrequenz $f_2$ des Schwingkreises 14, angegeben. Bei Kupfer, Aluminium, Messing und Bronze ergeben sich die Kurven 41-44, jeweils mit voll auf das Prüfteil 8 aufgesetzter Prüfspule 10. Hebt man dagegen die Prüfspule 10 vollständig vom Prüfteil 8 ab, so erhält man die gestrichelte Kurve 45, die die Kurven 41-44 an den Punkten 46-49 schneidet. Dabei entsprechen die Schnittpunkte 46-49 dem Wert der Steuerspannung $U_S$ bzw. der Resonanzfrequenz $f_2$, für den sich Übereinstimmung der Oszillatorspannung $U_M$ im abgehobenen und aufgesetzten Zustand der Prüfspule 10 erreichen läßt. Die großen Unterschiede der zu den Schnittpunkten 46-49 gehörigen $U_M$-Werte geben eine Vorstellung davon, um wieviel der Teiler in Figur 1 zur Einstellung eines passenden $U_V$-Wertes verstellt werden mußte.

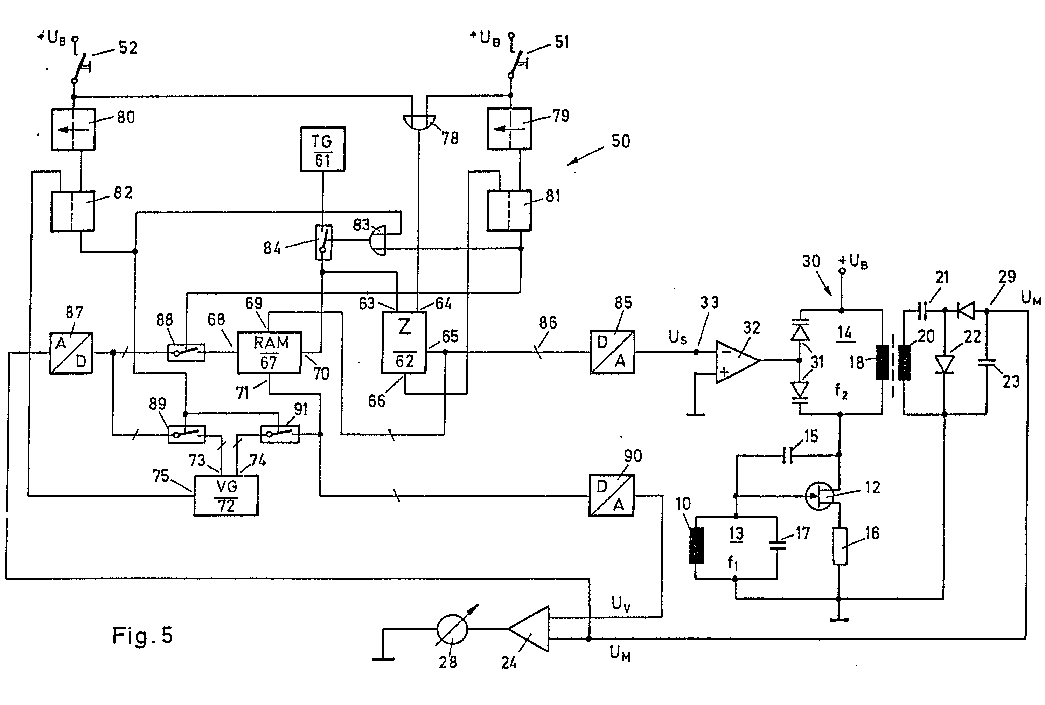

In Figur 4 werden die Grundzüge der Erfindung anhand eines Blockschaltbildes erkennbar gemacht. Eine Oszillatorschaltung 30, die der nach Figur 2 entsprechen soll, steht hier stellvertretend für mögliche andere Schaltungen zur Entwicklung einer dem Scheinwiderstand der Prüfspule 10 entsprechenden Meßgröße $U_M$. Die letztere liegt einerseits an einem der beiden Eingänge des Differenzverstärkers 24, dessen Ausgang das Anzeigeinstrument 28 speist, andererseits an einem Eingang einer Steueranordnung 50, deren nähere Beschreibung weiter unten folgen soll. Ein erster Ausgang der Steueranordnung 50 ist mit dem Steuereingang der Oszillatorschaltung 30, ein zweiter Ausgang der Steueranordnung mit dem zweiten Eingang des Verstärker 24 verbunden. Die Steueranordnung 50 besitzt ferner zwei Setzeingänge, in die mittels zweier Eingabeschalter 51 und 52 Setzsignale eingegeben werden können.

Die Arbeitsweise der Einrichtung ist die folgende. Über Eingabeschalter 51 wird ein erstes Setzsignal in die Steueranordnung 50 eingegeben, nachdem die Prüfspule 10 vom Prüfteil entfernt worden ist. Damit wird in der Steueranordnung 50 der Aufbau einer sich kontinuierlich ändernden Steuergröße, der Spannung $U_S$ in Gang gesetzt, die einen Meßparameter, im vorliegenden Falle die Resonanzfrequenz $f_2$ der Oszillatorschaltung 30, durchsteuert. In Abhängigkeit vom Meßparameter ändert sich die Meßgröße, die Oszillatorspannung $U_M$. Sie wird in der Steueranordnung 50 in einem Zweikoordinatenspeicher eingegeben, dessen zweite Koordinate von der Steuerspannung $U_S$ ausgesteuert wird. Damit ist die Meßgröße $U_M$ als

Funktion des Meßparameters $f_2$ gespeichert. Nun bringt man die Prüfspule 10 mit dem Prüfteil in Berührung und betätigt den zweiten Eingabeschalter 52. Wieder wird in der Steueranordnung 50 eine sich kontinuierlich ändernde Steuerspannung $U_S$ aufgebaut, unter deren Einfluß die Oszillatorspannung $U_M$ variiert wird. Die Oszillatorspannung $U_M$ und die zuvor gespeicherte Oszillatorspannung werden in synchronen Ablauf an die Eingänge eines Vergleichers gelegt, der im Augenblick der Signalgleichheit an seinen Eingängen ein Signal abgibt, das den weiteren Ablauf des Speichers und der Steuerspannung stoppt. Damit wird die Schnittstelle zweier Funktionen ermittelt und gespeichert, nämlich nach Figur 3 die Schnittstelle der Funktion 45 mit einer der Funktionen 41-44. Solche Schnittstellen (46-49) können unmittelbar zur Messung einer unbekannten Leitfähigkeit herangezogen werden. In diesem Falle gibt sowohl die an der Schnittstelle vorliegende Oszillatorspannung $U_M$, als auch die zugehörige Steuerspannung $U_S$ ein Maß für die Höhe der Leitfähigkeit ab. Soll nicht der absolute Wert der Werkstoffeigenschaft gefunden werden, sondern seine örtlichen Unterschiede, hier also Leitfähigkeitsunterschiede oder von Fehlern verursachte Inhomogenitäten derselben, so hat man mit der Schnittstelle der beiden Funktionen nicht nur den für optimale Kompensation der Lageabhängigkeit der Prüfspule erforderlichen Meßparameter $U_S$ gewonnen, sondern auch den beim Nullabgleich des Anzeigeinstrumentes nötigen Vergleichswert $U_V$ für die Oszillatorspannung $U_M$.

In Figur 5 ist ein Beispiel für eine Steuerschaltung 50 ausgeführt. Der Oszillator 30 entspricht in allen Einzelheiten dem nach Figur 2 und bedarf daher keiner weiteren Beschreibung. Seine Spannung $U_M$ am Ausgang 29 sowie eine Vergleichsspannung $U_V$ liegen am ersten bzw. zweiten Eingang des Differenzverstärkers 24, dessen Ausgang das Anzeigeinstrument 28 speist.

Wesentliche Teile der Steuerschaltung 50 sind ein Taktfrequenzgenerator 61, der eine kontinuierliche Folge von Zählimpulsen erzeugt, ein Zähler 62, der einen Zähleingang 63, einen Rücksetzeingang 64, einen Zählwertausgang 65 und einen Überlaufausgang 66 besitzt und der im vorliegenden Beispiel 8 Bit fassen soll, ferner ein Schreib-Lese-Speicher 67, der im Beispiel eine Auflösung von 8 Bit bei 256 Speicherplätzen aufweisen soll und der einen Dateneingang 68, einen Adresseneingang 69, einen Takteingang 70 und einen Datenausgang 71 besitzt, schließlich ein Digitalwertvergleicher 72 mit zwei Eingängen 73, 74 und einem Ausgang 75. Zwei Eingabeschalter 51, 52 sind über ein Oder-Gatter 78 mit dem Rücksetzeingang 64 des Zählers 62, ferner mit den Eingängen zweier monostabiler Kippstufen 79, 80 verbunden, deren Ausgänge wiederum mit den Setzeingängen zweier bistabiler Kippstufen 81, 82 verbunden sind. Die Ausgänge der beiden letzteren sind über ein Oder-Gatter 83 an den Steuereingang eines elektronischen Schalters 84, z. B. eines Feldeffekttransistors, angeschlossen, der es seinerseits möglich macht, den Taktgenerator 61 an den Zähleingang 63 des Zählers 62 und an den Takteingang 70 des Schreib-Lese-Speichers 67 anzuschließen. Vom Überlaufausgang 66 des Zählers 62 führt eine Leitung zum Rücksetzeingang der ersten bistabilen Kippstufe 81, während weitere Leitungen von Zählwertausgang 65 des Zählers über einen Digital-Analog-Umsetzer 85 zum Steuereingang 33 der Oszillatorschaltung 11 bzw. direkt zum Adresseneingang 69 des Schreib-Lese-Speichers 67 führen. Die Leitung zwischen Zähler 62 und Digital-Analog-Umsetzer 85 wurde durch einen Strich 86 markiert um, wie in der Folge bei weiteren Leitungen, anzudeuten, daß es sich um ein 8 Bit übertragendes digitales Leitungsbündel handeln soll. Der Ausgang 29 der Oszillatorschaltung 30 ist mit dem Eingang eines Digital-Analog-Umsetzers 87 verbunden, dessen Ausgang über zwei elektronische Schalter 88, 89 einerseits mit dem Dateneingang 68 des Schreib-Lese-Speichers 67, andererseits mit dem Eingang 73 des Digitalwertvergleichers 72 verbunden werden kann. Der Datenausgang 71 des Schreib-Lese-Speichers 67 ist über einen Digital-Analog-Umsetzer 90 an den zweiten Eingang des Differenzverstärkers 24 angeschlossen und kann über einen elektronischen Schalter 91 an den Eingang 74 des Digitalwertvergleichers 72 angeschlossen werden. Die Steuereingänge der elektronischen Schalter 89, 91 sind verbunden mit dem Ausgang der bistabilen Kippstufe 82, während der Steuereingang des Schalters 88 mit dem Ausgang der bistabilen Kippstufe 81 verbunden ist. Vom Ausgang 75 des Digitalwertvergleichers 72 führt ein Anschluß zum Rücksetzeingang der bistabilen Kippstufe 82.

Die beschriebene Schaltung kann wie folgt betrieben werden. Während Prüfspule 10 zunächst vom Prüfteil entfernt ist, wird Schalter 51 kurzzeitig betätigt. Die Vorderflanke des dabei erzeugten Eingabeimpulses setzt über das Oder-Gatter 78 den Zähler 62 zurück und startet die monostabile Kippstufe 79. Nach Ablauf der Laufzeit der letzteren setzt die Rückflanke ihres Ausgangsimpulses die bistabile Kippstufe 81, die ihrerseits über Oder-Gatter 83 und Schalter 84 die Taktfrequenzimpulse des Taktfrequenzgenerators 61 an den Zähleingang 63 des Zählers 62 sowie an den Takteingang 70 des Schreib-Lese-Speichers 67 legt und gleichzeitig über Schalter 88 die im Analog-Digital-Umsetzer 87 in eine digitale Größe umgesetzte Meßgröße der Oszillatorschaltung 30 mit dem Dateneingang 68 des Schreib-Lese-Speichers 67 verbindet. Während sich der Zählwert am Ausgang 65 des Zählers 62 kontinuierlich ändert, entsteht am Ausgang des Digital-Analog-Umsetzers 85 eine sich entsprechend ändernde analoge Steuerspannung $U_S$, die innerhalb des vorgesehenen Bereiches den Kapazitätswert der Dioden 31 und damit die Resonanzfrequenz $f_2$ des Schwingkreises 14 durchstimmt. Die der in Abhängigkeit von der Steuerspannung $U_S$ sich einstellenden Oszillatorspannung $U_M$ entsprechende digitale Größe am Ausgang des Analog-Digital-Umsetzers 87 wird in den Schreib-Lese-Speicher 67 eingegeben, während sich dessen Adressen ebenfalls in Abhängigkeit von $U_S$ ändern. Der Schreib-Lese-Speicher 67 nimmt so die Funktion $U_M = f(U_S)$ auf und speichert sie. Der Speichervorgang wird abgeschlossen durch einen Überlaufimpuls aus Zähler 62, der die bistabile Kippstufe 81 zurücksetzt, die Zufuhr von Taktfrequenzimpulsen zum Zähler 62 sowie zum Schreib-Lese-Speicher 67 unterbindet und die Änderung der Steuerspannung $U_S$ beendet. Der zweite Schritt des Abgleichvorganges wird eingeleitet, indem man die Prüfspule 10 mit dem Prüfteil verbindet, z. B. durch Aufsetzen der Prüfspule auf das Prüfteil und den Schalter 52 kurzzeitig betätigt. Zähler 62 wird über Oder-Gatter 78 zurückgesetzt und, verzögert durch die monostabile Kippstufe 80, wird die bistabile Kippstufe 82 gesetzt. Diese startet über Oder-Gatter 83 und Schalter 84 den Zählvorgang im Zähler 62 und über den Digital-Analog-Umsetzer 85 den Aufbau der kontinuierlich sich ändernden Steuerspannung $U_S$, die ·in der gleichen Weise wie vorher die Resonanzfrequenz $f_2$ der Oszillatorschaltung 30 durchstimmt. Durch das Setzen der bistabilen Kippstufe 82 ist der Ausgang des Analog-Digital-Umsetzers 87 über Schalter 89 mit dem Eingang 73 sowie der Datenausgang 71 des Schreib-Lese-Speichers 67 über Schalter 91 mit dem Eingang 74 des Digitalwertvergleichers 72 verbunden worden. Schreib-Lese-Speicher 67 erhält Adressen vom Zähler 62 und über Schalter 84 Taktfrequenzimpulse vom Taktfrequenzgenerator 61. An den Eingängen 73, 74 des Digitalwertvergleichers 72 liegen so zwei Größen, von denen die eine der Oszillatorspannung $U_M$ bei mit dem Prüfteil verbundener Prüfspule 10, die andere der Oszillatorspannung $U_M$ bei vom Prüfteil entfernter Prüfspule 10 entspricht, beidemale in gleicher Abhängigkeit von der Steuerspannung $U_S$. Im Augenblick wo die beiden Eingangsgrößen gleich werden, wo also einer der Schnittpunkte 46-49 nach Figur 3 erreicht oder überschritten wird, stellt sich am Ausgang 75 des Digitalwertvergleichers 72 ein Signal ein, das die bistabile Kippstufe 82 zurücksetzt und damit den Vergleich der beiden Funktionen beendet. Der Zähler 62 erhält keine weitere Taktfrequenzimpulse mehr. Der erreichte Zählwert am Ausgang 65 und damit die ihm entsprechende Steuerspannung $U_S$ sowie die zugehörige Resonanzfrequenz $f_2$ bleiben erhalten. Da sich die Adresse am Eingang 70 des Schreib-Lese-Speichers 67 nicht mehr verändert, bleibt am Datenausgang 71 der im Augenblick der Übereinstimmung der beiden Funktionen vorliegende Meßwert ebenfalls erhalten und steht nach Umsetzung in eine analoge Größe als Vergleichswert $U_V$ für die weiteren Prüfaufgaben zur Verfügung. Überläuft also beispielsweise anschließend an den beschriebenen Vorgang eine Tastprüfspule 10 einen Fehler im Prüfteil, so ändert sich die Oszillatorspannung $U_M$, während die Vergleichsspannung $U_V$ konstant bleibt. Am Anzeigeinstrument wird der Fehler durch einen Ausschlag angezeigt.

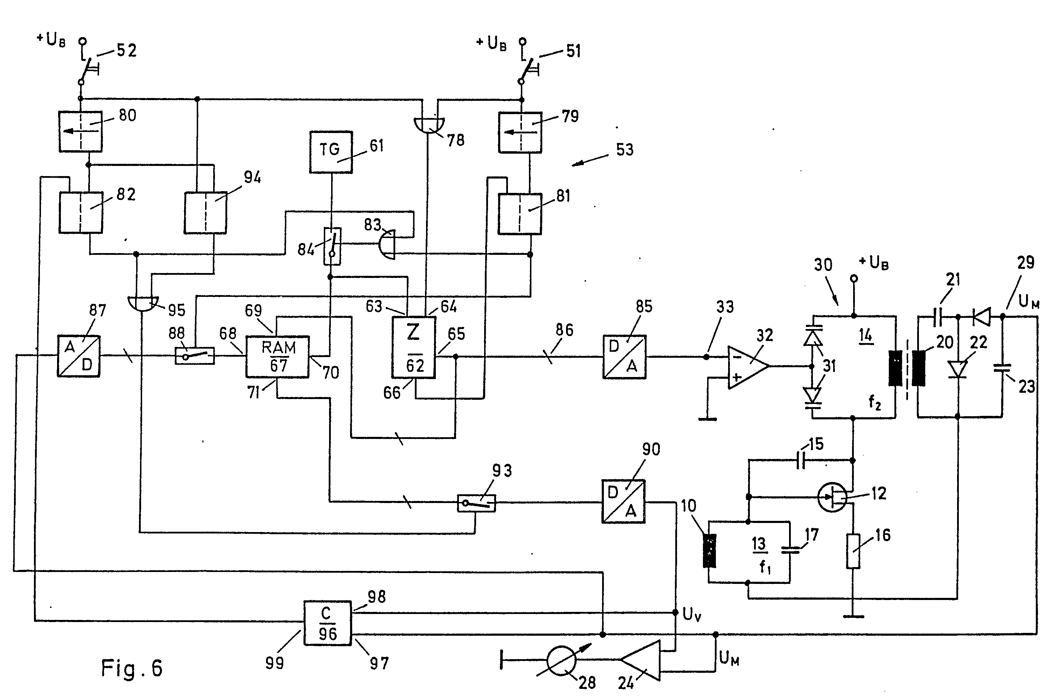

Die in Figur 6 benutzte Steuerschaltung 53 unterscheidet sich von Steuerschaltung 50 im wesentlichen dadurch, daß anstelle des Digitalwertvergleichers 72 ein Analogwertvergleicher 96, ein einfacher Komparator, Anwendung findet. Dieser liegt mit seinen beiden Eingängen 97, 98 am Ausgang 29 der Oszillatorschaltung 30 bzw. am Ausgang des Digital-Analog-Umsetzers 90. Sein Ausgang 99 ist mit dem Rücksetzeingang der bistabilen Kippstufe 82 verbunden. Der letzteren ist eingangsseitig eine weitere bistabile Kippstufe 94 parallel geschaltet, deren Rücksetzeingang an den Ausgang des Eingabeschalters 52 angeschlossen ist. Während nur der Ausgang der Kippstufe 82 mit dem Oder-Gatter 83 verbunden ist, führt von den Ausgängen der beiden Kippstufen 82 und 94 eine Verbindung über ein Oder-Gatter 95 zu einem elektronischen Schalter 93, der zwischen den Datenausgang 71 des Schreib-Lese-Speichers 67 und den Eingang des Digital-Analog-Umsetzers 90 gelegt wurde. Die beiden Schalter 89 und 91 entfallen.

Die Arbeitsweise der Steuerschaltung 53 entspricht weitgehend der von Steuerschaltung 50. Wie zuvor beschrieben, wird bei vom Prüfteil getrennter Prüfspule 10 eine der Oszillatorspannung $U_M$ entsprechende digitale Größe als Funktion der Steuerspannung $U_S$ in den Schreib-Lese-Speicher 67 eingespeichert. Auf ein Signal des Eingabeschalters 52 wird bei mit dem Prüfteil verbundener Prüfspule 10 neben dem Zähler 62 auch die bistabile Kippstufe 94 zurückgesetzt. Nach Ablauf der Laufzeit der monostabilen Kippstufe 80 wird in bekannter Weise über Oder-Gatter 83 und Schalter 84 der Aufbau der sich kontinuierlich ändernden Steuerspannung $U_S$ gestartet. Gleichzeitig werden die beiden bistabilen Kippstufen 82 und 94 gesetzt, deren Ausgangssignal üoer Oder-Gatter 95 den Schalter 93 schließt. Auf diese Weise gelangt die im Schreib-Lese-Speicher gespeicherte Meßgröße über den Digital-Analog-Umsetzer 90 an den Eingang 98 des Analogwertvergleichers 96, während die direkt aus der Oszillatorschaltung 30 entnommene Meßgröße $U_M$ am Eingang 97 des Analogwertvergleichers 96 liegt. Der letztere vergleicht die sich ändernden Meßgrößen an seinen Eingängen und gibt bei Übereinstimmung derselben an seinem Ausgang 99 ein Signal ab, das die bistabile Kippstufe 82 zurücksetzt und damit über Oder-Gatter 83 und Schalter 84 den Vergleichsvorgang abbricht. Schalter 93 bleibt jedoch über Oder-Gatter 95 und bistabile Kippstufe 94 geschlossen, so daß die Meßgröße am Ausgang des Digital-Analog-Umsetzers 90 als Vergleichsspannung $U_V$ am Eingang des Differenzverstärkers 24 erhalten bleibt und der Prüfbetrieb wie zuvor beschrieben aufgenommen werden kann. Die Anwendung zweier Eingabeschalter 51, 52 ist übrigens nicht unbedingt erforderlich. Ebenso ist eine Prüfschaltung möglich, bei der durch den einzigen Eingabeschalter 51 der erste Abgleichschritt, also das Einspeichern der Meßgröße bei vom Prüfteil entfernter Prüfspule gestartet wird und bei dem nach Ablauf der Zählperiode des Zählers 62 durch Überlaufausgang 66 eine Umschaltung des Eingabeschalters 51 auf den zweiten Eingabeeingang, also auf den Eingang der monostabilen Kippstufe 80 erfolgt, so daß ein zweites Betätigen des Eingabeschalters 51 den Vergleich der beiden Meßgrößen in die Wege leitet.

Es liegt auf der Hand, daß das Vorgesagte nicht nur für Vergleiche bei den beiden extremen Zuständen « Prüfspule vom Prüfteil entfernt » und « Prüfspule voll mit dem Prüfteil verbunden » gilt, sondern daß auch bei zwischen diesen Extremen liegenden Zuständen der Vergleich der beiden Funktionen durchgeführt werden kann. Zum Beispiel läßt sich eine besonders gute Abhebekompensation bei Tastprüfspulen häufig dadurch verwirklichen, daß man den Vergleich durchführt bei den beiden Zuständen « Prüfspule um den Betrag einer nichtleitenden Zwischenlage vom Prüfteil entfernt » und « Prüfspule unmittelbar auf das Prüfteil aufgesetzt ». Andererseits ist auch der Einsatz der Erfindung keineswegs auf Tastprüfspulen beschränkt. Vielmehr kann sie beispielsweise auch bei Durchlaufprüfspulen zur Kompensation des sogenannten Wackeleffektes benutzt werden. Unter dem letzteren versteht man eine Änderung der Meßgröße in Abhängigkeit von Lageänderungen des Prüfteils innerhalb der Durchlaufspule quer zur Transportrichtung. Hierzu ist lediglich die Realisierung zweier repräsentativer Zustände erforderlich. In den oben beschriebenen Beispielen wurde zum Ableiten einer Meßgröße aus dem Scheinwiderstand der Prüfspule stets eine Oszillatoranordnung eingesetzt. Obwohl eine Oszillatoranordnung für die Anwendung der Erfindung besonders gute Voraussetzungen bietet, so ist sie doch nicht die einzige Anordnung, die in Frage kommt. Geeignet für die Anwendung der Erfindung sind solche Anordnungen, bei denen die Meßgröße, wenn zwei verschiedene geometrische Beziehungen der Prüfspule zum Prüfgut vorliegen, nach zwei unterschiedlichen Funktionen von einem Meßparameter abhängt und bei denen sich diese Funktionen an wenigstens einer Stelle schneiden.

## Ansprüche

1. Verfahren zur Prüfung eines metallischen Prüfteiles (8) aufgrund von mittels einer Prüfspule (10) im Prüfteil (8) erzeugten Wirbelströmen, wobei eine vom Scheinwiderstand der Prüfspule (10) abhängige Meßgröße ermittelt wird, die als Maß für Werkstoffeigenschaften des Prüfteiles (8) dient, dadurch gekennzeichnet, daß bei Vorliegen einer ersten geometrischen Beziehung der Prüfspule (10) zum Prüfteil (8) ein Meßparameter kontinuierlich innerhalb eines bestimmten Bereiches geändert wird und gleichzeitig die o. g. Meßgröße als Funktion des Meßparameters aufgenommen und gespeichert wird, daß bei Vorliegen einer zweiten geometrischen Beziehung der Prüfspule (10) zum Prüfteil (8) der gleiche Meßparameter kontinuierlich innerhalb des gleichen Bereiches geändert wird und wiederum die Meßgröße als Funktion des Meßparameters aufgenommen wird, daß dabei die zuvor gespeicherte Funktion mit der zuletzt genannten Funktion verglichen wird und daß bei Übereinstimmung der beiden Funktionen die im Augenblick der Übereinstimmung vorliegende Meßgröße und/ oder der im gleichen Augenblick vorliegende Meßparameter ermittelt werden.

2. Vorrichtung zum Durchführen des Verfahrens nach Anspruch 1, mit einer Prüfspule (10), die geeignet ist, im Prüfteil (8) Wirbelströme zu erzeugen, mit einer elektrischen Schaltungsanordnung zum Herstellen einer vom Scheinwiderstand der Prüfspule (10) abhängigen Meßgröße, bestehend in einer Oszillatorschaltung (30), die Verstärkermittel (12) und zwei auf benachbarte Frequenzen ($f_1$, $f_2$) abgestimmte Schwingkreise (13, 14) umfaßt, wobei der Scheinwiderstand der Prüfspule die induktive Komponente eines der beiden oder beider Schwingkreise ganz oder teilweise darstellt und wobei ein die Resonanzfrequenz eines der beiden Schwingkreise beeinflussendes Bauteil veränderbar ist, dadurch gekennzeichnet, daß das die Resonanzfrequenz ($f_2$) eines der beiden Schwingkreise (14) beeinflussende Bauteil (31) durch eine elektrische Steuergröße ($U_S$) steuerbar ist, daß ein Generator (61, 62, 85) zum Herstellen der sich gleichförmig ändernden Steuergröße ($U_S$) vorgesehen ist, der elektrisch mit dem Steuereingang des genannten Bauteiles (31) verbunden ist, daß eine Speicheranordnung (67) vorgesehen ist, an deren Eingang (68) der die Meßgröße ($U_M$) führende Ausgang (29) der Oszillatorschaltung (30) anschließbar ist und die von der elektrischen Steuergröße ($U_S$) gesteuert wird, daß ferner eine Vergleicheranordnung (72, 96) vorgesehen ist, deren erster Eingang an den Ausgang (29) der Oszillatorschaltung (30) und deren zweiter Eingang an den Ausgang (71) der Speicheranordnung (67) angeschlossen oder anschließbar ist und daß die Vergleicheranordnung (72, 96) ein Signal abgibt, wenn die Meßgrößen an ihren Eingängen übereinstimmen.

3. Vorrichtung nach Anspruch 2, dadurch gekennzeichnet, daß das die Resonanzfrequenz ($f_2$) beeinflussende Bauteil aus ein oder mehreren spannungsabhängigen Kondensatoren (31), z. B. Kapazitätsdioden, besteht.

4. Vorrichtung nach Anspruch 2 oder 3, dadurch gekennzeichnet, daß der Generator zum Herstellen einer sich gleichförmig ändernden Steuergröße ($U_S$) aus einem Taktfrequenzgenerator (61), einem an diesen anschließbaren Zähler (62) und einem mit dem Ausgang des Zählers (62) verbundenen Digital-Analog-Umsetzer (85) besteht.

5. Vorrichtung nach Anspruch 4, dadurch gekennzeichnet, daß Schaltmittel (84) zum Anschließen des Taktfrequenzgenerators (61) an den Zähler (62) vorgesehen sind.

6. Vorrichtung nach einem der Ansprüche 4-5, dadurch gekennzeichnet, daß die Speicheranordnung in einem digitalen Schreib-Lese-Speicher (67) besteht, vor dessen Dateneingang (68) ein Analog-Digital-Umsetzer (87) geschaltet ist und dessen Adresseneingang (69) an den Ausgang (65) des Zählers (62) angeschlossen ist.

7. Vorrichtung nach Anspruch 6, dadurch gekennzeichnet, daß Schaltmittel (88) zum Anschließen der Meßgröße an den Dateneingang (68) des Schreib-Lese-Speichers (67) vorgesehen sind.

8. Vorrichtung nach einem der Ansprüche 4-7, dadurch gekennzeichnet, daß als Vergleicher-anordnung ein Digitalwertvergleicher (72) vorge-sehen ist, dessen erster Eingang (73) über einen Analog-Digital-Umsetzer an den Ausgang (29) der Oszillatorschaltung (30) und dessen zweiter Eingang (74) an den Datenausgang (71) des Schreib-Lese-Speichers (67) angeschlossen oder anschließbar ist.

9. Vorrichtung nach einem der Ansprüche 4-7, dadurch gekennzeichnet, daß als Vergleicher-anordnung ein Analogwertvergleicher (96) vorge-sehen ist, dessen erster Eingang (97) an den Ausgang (29) der Oszillatorschaltung (30) und dessen zweiter Eingang (98) über einen Digital-Analog-Umsetzer (90) an den Datenausgang (71) des Schreib-Lese-Speichers (67) angeschlossen oder anschließbar ist.

10. Vorrichtung nach einem der Ansprüche 6-9, dadurch gekennzeichnet, daß eine erste bistabile Kippstufe (81) vorgesehen ist, an deren Ausgang Schaltmittel (84) zum Verbinden des Taktfrequenzgenerators (61) mit dem Zähler (62) und dem Schreib-Lese-Speicher (67) sowie Schaltmittel (88) zum Verbinden des Ausgangs (29) der Oszillatorschaltung (30) über einen Digital-Analog-Umsetzer (87) mit dem Dateneingang (68) des Schreib-Lese-Speichers (67) angeschlossen sind, daß der Überlaufausgang (66) des Zählers (62) mit dem Rücksetzeingang der ersten bistabilen Kippstufe (81) verbunden ist, daß eine zweite bistabile Kippstufe (82) vorgesehen ist, an deren Ausgang Schaltmittel (84) zum Verbinden des Taktfrequenzgenerators (61) mit dem Zähler (62) und dem Schreib-Lese-Speicher (67) sowie Schaltmittel (91, 93) zum Verbinden des Datenausganges (71) des Schreib-Lese-Speichers (67) mit der Vergleicheranordnung (72, 96) angeschlossen sind, daß der Ausgang der Vergleicheranordnung (72, 96) mit dem Rücksetzeingang der zweiten bistabilen Kippstufe (82) verbunden ist und daß ein oder mehrere Eingabeschalter (51, 52) zum Setzen der ersten und zweiten bistabilen Kippstufe (81 bzw. 82) vorgesehen sind.

11. Vorrichtung nach Anspruch 10, dadurch gekennzeichnet, daß zwischen die. Eingabeschalter (51, 52) und die erste bzw. zweite bistabile Kippstufe (81 bzw. 82) Verzögerungsglieder (79, 80) geschaltet sind.

12. Vorrichtung nach einem der Ansprüche 6-11, dadurch gekennzeichnet, daß an den Datenausgang (71) des Schreib-Lese-Speichers (67) ein Digital-Analog-Umsetzer (90) angeschlossen ist, dessen Ausgang mit dem ersten Eingang einer Differenzmeßanordnung (24, 28) verbunden ist, während der zweite Eingang derselben mit dem Ausgang (29) der Oszillatorschaltung (30) verbunden ist.

## Claims

1. Method of testing a metal test piece (8) on the basis of eddy currents produced in the test piece (8) by means of a testing coil (10), in which a measured quantity dependent on the impedance of the testing coil (10) is determined, which measured quantity serves as a measure for material characteristics of the test piece (8), characterised in that, while a first geometric relationship obtains between the testing coil (10) and the test piece (8), a measurement parameter is continuously varied within a predetermined range and at the same time the above-mentioned measured quantity is received and stored as a function of the measurement parameter, that while a second geometric relationship obtains between the testing coil (10) and the test piece (8), the same measurement parameter is continuously varied within the same range and the measured quantity is one again received as a function of the measurement parameter, that furthermore the previously stored function is compared with the last-mentioned function and that, when the two functions are identical, the measured quantities obtained at the moment of identity and/or the measurement parameter which exists at the same time is or are determined.

2. Device for carrying out the method according to claim 1, with a testing coil (10) which is suitable for producing eddy currents in the test piece (8) and with an electric circuit arrangement for producing a measured quantity which is dependent on the impedance of the testing coil (10), consisting of an oscillatory circuit (30), which includes the amplifying means (12) and two resonant circuits (13, 14) tuned to neighbouring frequencies ($f_1$, $f_2$), the impedance of the testing coil representing wholly or partly the inductive component of one of the two or of both of the resonant circuits, and a component which influences the resonant frequency of one of the two resonant circuits being adjustable, characterised in that the component (31) which influences the resonant frequency ($F_2$) of one of the two resonant circuits (14) is controllable by an electrical control quantity ($U_S$), that a generator (61, 62, 85) is provided for producing the uniformly varying control quantity ($U_S$), which is electrically con-nected with the control input of the said component (31), that a storage arrangement (67) is provided, to the input (68) of which the output (29) of the oscillatory circuit (30) which carries the measuring quantity ($U_M$) can be connected and which is controlled by the electrical control quantity ($U_S$), that further a com-parator (72, 96) is provided, the first input of which is or can be connected to the output (29) of the oscillatory circuit (30) and the second input of which is or can be connected to the output (71) of the storage arrangement (67) and that the comparator (72, 96) emits a signal when the measured values at its inputs are identical.

3. Device according to claim 2, characterised in that the component which influences the resonant frequency ($f_2$) consists of one or more voltage-dependent capacitors (31), e. g. capacitative diodes.

4. Device according to claim 2 or 3, characterised in that the generator for producing a uniformly varying control quantity ($U_S$) consists of a beat frequency generator (61), a counter (62) which can be connected to the latter and a digital-analog converter (85) connected to the output of the counter (62).

5. Device according to claim 4, characterised in that switching means (84) are provided for connecting the beat frequency generator (61) to the counter (62).

6. Device according to one of claims 4 to 5, characterised in that the storage arrangement consists of a digital write-read-store (67) preceding where the data input (68) is connected an analog-digital-converter (87) and the address input (69) of which is connected to the output (65) of the counter (62).

7. Device according to claim 5, characterised in that switching means (88) are provided for connecting the measured quantity to the data input (68) of the write-read-store (87).

8. Device according to one of claims 4 to 7, characterised in that a digital value comparator (72) is provided as the comparator, the first input (73) of which is or can be connected via an analog digital converter to the output (29) of the oscillatory circuit (30) and the second input (74) of which is or can be connected to the data output (71) of the write-read-store (67).

9. Device according to one of claims 4 to 7, characterised in that an analog value comparator (96) is provided as the comparator, the first input (97) of which analog value comparator is or can be connected to the output (29) of the oscillatory circuit (30) and the second input (98) of which is or can be connected via a digital-analog-converter (90) to the data output (71) of the write-read-store (67).

10. Device according to one of claims 6 to 9, characterised in that a first bistable flip-flop stage (81) is provided, to the output of which are connected switching means (84) for connecting the beat frequency generator (61) to the counter (62) and the write-read-store (67), as well as switching means (88) for connecting the output (29) of the oscillatory circuit (30) via a digital-analog-converter (87) to the data input (68) of the write-read-store (67), that the overflow output (66) of the counter (62) is connected to the reset input of the first bistable flip-flop stage (81), that a second bistable flip-flop stage (82) is provided, to the output of which are connected switching means (84) for connecting the beat frequency generator (61) to the counter (62) and the write-read-store (67), as well as switching means (91, 93) for connecting the data output (71) of the write-read-store (67) to the comparator (72, 96), that the output of the comparator (72, 96) is connected to the reset input of the second bistable flip-flop stage (82) and that one or more input switches (51, 52) are provided for setting the first and second bistable flip-flop stages (81 or 82).

11. Device according to claim 10, characterised in that delay elements (79, 80) are connected between the input switches (51, 52) and the first or second bistable stage (81 or 82).

12. Device according to one of claims 6 to 11, characterised in that a digital-analog-converter (90) is connected to the data output (71) of the write-read-store (67), the output of which converter is connected to the first input a difference measuring arrangement (24, 28), while the second input of the same is connected to the output (29) of the oscillatory circuit (30).

**Revendications**

1. Procédé pour examiner une pièce d'essai métallique (8) en utilisant des courants parasites produits dans la pièce d'essai (8) par une bobine d'exploration (10) et dans lequel on mesure une grandeur qui dépend de la résistance apparente de la bobine d'exploration (10) et qui sert de mesure des propriétés du matériau constituant la pièce d'essai (8), caractérisé en ce que, dans une première disposition géométrique de la bobine d'exploration (10) par rapport à la pièce d'essai (8), un paramètre de mesure varie d'une manière continue à l'intérieur d'un domaine déterminé et que simultanément la grandeur de mesure déjà mentionnée est enregistrée et emmagasinée comme fonction du paramètre de mesure, en ce que, dans une deuxième disposition géométrique de la bobine d'exploration (10) par rapport à la pièce d'essai (8), le même paramètre de mesure varie d'une manière continue à l'intérieur du même domaine et que la grandeur de mesure est encore enregistrée et emmagasinée comme fonction du paramètre de mesure et en ce que la fonction précédemment enregistrée et emmagasinée est comparée à la fonction enregistrée et emmagasinée en dernier lieu et que, lorsque les deux fonctions sont égales, on mesure la grandeur de mesure obtenue au moment de cette coïncidence et/ou la valeur du paramètre de mesure au même moment.

2. Dispositif pour l'application du procédé selon la revendication 1, comprenant une bobine d'exploration (10) apte à produire dans la pièce d'essai (8) des courants parasites, un branchement électrique qui produit une grandeur de mesure fonction de la résistance apparente de la bobine d'exploration (10) et est constitué par un circuit oscillateur (30) comportant un dispositif d'amplification (12) et deux circuits oscillants (13, 14) accordés sur deux fréquences voisines ($f_1$, $f_2$) la résistance apparente de la bobine d'exploration représentant en totalité ou en partie la composante d'induction de l'un des deux ou des deux circuits oscillants et une pièce qui agit sur la fréquence de résonance de l'un des deux circuits oscillants pouvant être modifiés, caractérisé en ce que la pièce (31) qui agit sur la fréquence de résonance ($f_2$) de l'un des deux circuits oscillants (14) peut être commandée par une grandeur électrique commandée ($U_S$), en ce que l'installation comprend un générateur (61, 62, 85) qui produit la grandeur de commande ($U_S$) qui varie d'une manière continue et est relié électriquement à l'entrée de commande de la pièce en question (31), en ce que l'installation comprend un dispositif d'enregistrement et d'emmagasinage (67) à l'entrée (68) duquel on peut relier la sortie (29) du circuit oscillateur (30) qui conduit la grandeur de mesure ($U_M$), et qui est commandé par la grandeur de commande électrique ($U_S$), en ce que l'installation comporte en plus un dispositif de comparaison (72, 96) dont la première entrée est reliée à la sortie (29) du circuit oscillateur (30) et dont la deuxième entrée est reliée à la sortie (71) du dispositif d'enregistrement et d'emmagasinage (67) et en ce que le dispositif de comparaison (72, 96) émet un signal lorsque les grandeurs mesurées ont la même valeur au niveau de leurs entrées.

3. Dispositif selon la revendication 2, caractérisé en ce que la pièce qui exerce une action sur la fréquence de résonance ($f_2$) est constituée par un ou plusieurs condensateurs (31) dont la capacité dépend de la fréquence ou par des diodes à capacité.

4. Dispositif selon l'une des revendications 2 ou 3, caractérisé en ce que le générateur qui produit une grandeur de mesure ($U_S$) qui varie d'une manière continue est constitué par un générateur de fréquence rythmée (61), par un compteur (62) pouvant être relié à ce générateur et par un convertisseur numérique analogique (85) relié à la sortie du compteur (62).

5. Dispositif selon la revendication 4, caractérisé en ce que l'installation comprend des dispositifs de commutation (84) permettant de relier le générateur de fréquence rythmée (61) au compteur (62).

6. Dispositif selon l'une des revendications 4 ou 5, caractérisé en ce que le dispositif d'enregistrement et d'emmagasinage est constitué par un convertisseur numérique analogique (67) dont l'entrée de données (88) est reliée à un convertisseur numérique analogique (67) dont l'entrée de données (88) est reliée à un convertisseur numérique analogique (87) situé en amont et dont la sortie d'adresses (69) est reliée à la sortie (65) du compteur (62).

7. Dispositif selon la revendication 6, caractérisé en ce qu'il comprend des dispositifs d'enclenchement (88) permettant de relier la grandeur de mesure à l'entrée de données (68) du dispositif d'enregistrement et de lecture (67).

8. Dispositif selon l'une des revendications 4 à 7, caractérisé en ce qu'il comprend, comme dispositif de comparaison, un comparateur numérique (72) dont la première entrée (73) est reliée ou peut être reliée, par l'intermédiaire d'un convertisseur numérique analogique, à la sortie (29) du circuit oscillateur (30) et dont la deuxième entrée (74) est reliée ou peut être reliée à la sortie de données (71) du dispositif d'enregistrement et d'emmagasinage (67).

9. Dispositif selon l'une des revendications 4 à 7, caractérisé en ce qu'il comprend, comme dispositif de comparaison, un comparateur analogique (96) dont la première entrée (97) est reliée et peut être reliée à la sortie (29) du circuit oscillateur (30) et dont la deuxième entrée (98) est reliée ou peut être reliée, par l'intermédiaire d'un convertisseur numérique analogique (90), à la sortie de données (71) du dispositif d'enregistrement et d'emmagasinage.

10. Dispositif selon l'une des revendications 6 à 9, caractérisé en ce qu'il comprend une première bascule bistable (81) à la sortie de laquelle sont reliés des dispositifs de commutation (84) permettant de relier le générateur de fréquence rythmée (61) au compteur (62) et au dispositif d'enregistrement et d'emmagasinage (67) et des dispositifs de commutation (88) permettant de relier la sortie (29) du circuit oscillateur (30) par l'intermédiaire d'un convertisseur numérique analogique (87), à l'entrée de données (68) du dispositif d'enregistrement et d'emmagasinage (67), en ce que la sortie de trop-plein (66) du compteur (62) est reliée à l'entrée de renvoi de la première bascule bistable (81), en ce que l'installation comprend une deuxième bascule bistable (82) à la sortie de laquelle sont reliés des dispositifs de commutation (84) permettant de relier le générateur de fréquences rythmées (61) au compteur (62) et au dispositif d'enregistrement et d'emmagasinage (67) et des dispositifs de commutation (91, 93) permettant de relier la sortie de données (71) du dispositif d'enregistrement et d'emmagasinage (67) au dispositif comparateur (72, 96) en ce que la sortie du dispositif comparateur (72, 96) est reliée à l'entrée de remise à l'état initial de la deuxième bascule bistable (82) et en ce que l'installation comprend un ou plusieurs commutateurs d'envoi (51, 52) pour le positionnement de la première et de la deuxième bascule bistable (81 ou 82).

11. Dispositif selon la revendication 10, caractérisé en ce que des organes de retard (79, 80) sont intercalés entre les commutateurs d'envoi (51, 52) et la première ou la deuxième bascule bistable (81 ou 82).

12. Dispositif selon l'une des revendications 6 à 11, caractérisé en ce que la sortie de données (71) du dispositif d'enregistrement et d'emmagasinage (67) est reliée à un convertisseur numérique analogique (90) dont la sortie est reliée à la première entrée d'un dispositif de mesure différentiel (24, 28) tandis que sa deuxième entrée est reliée à la sortie (29) du circuit oscillateur (30).

Fig. 4

Fig. 1

0 042 881

Fig. 2

Fig. 3

2

Fig.5

Fig. 6

4